# EUROPEAN PATENT SPECIFICATION

(11) **EP 4 299 530 B1**
(45) Date of publication and mention of the grant of the patent: **17.06.2026**
(21) Application number: 22899967.8
(22) Date of filing: 18.08.2022
(51) Int. Cl.: C07F 15/06, C07F 15/04, C01G 53/50, H01M 4/36, H01M 4/505, H01M 4/525, H01M 10/052, H01M 4/02

(54) **HIGH-NICKEL TERNARY CORE-SHELL PRECURSOR, POSITIVE ELECTRODE MATERIAL AND PREPARATION METHOD THEREFOR**
TERNÄRER KERN-SCHALE-VORLÄUFER MIT HOHEM NICKELGEHALT, POSITIVELEKTRODENMATERIAL UND HERSTELLUNGSVERFAHREN DAFÜR
PRÉCURSEUR NOYAU-ENVELOPPE TERNAIRE À HAUTE TENEUR EN NICKEL, MATÉRIAU D'ÉLECTRODE POSITIVE ET PROCÉDÉ DE PRÉPARATION ASSOCIÉ

(30) Priority: 02.12.2021 CN 202111458529
(43) Date of publication of application: 03.01.2024
(73) Proprietor: Jingmen Gem Co., Ltd, Jingmen, Hubei 448124 (CN)
(72) Inventor: XU, Kaihua, Hubei 448124 (CN); ZHANG, Kun, Hubei 448124 (CN); JIA, Dongming, Hubei 448124 (CN); LI, Cong, Hubei 448124 (CN); YANG, Xing, Hubei 448124 (CN); XUE, Xiaofei, Hubei 448124 (CN); FAN, Liangjiao, Hubei 448124 (CN); CHEN, Xiaofei, Hubei 448124 (CN); LI, Xueqian, Hubei 448124 (CN); ZHU, Xiaoshuai, Hubei 448124 (CN); LV, Hao, Hubei 448124 (CN); YUAN, Wenfang, Hubei 448124 (CN); WANG, Ding, Hubei 448124 (CN); YUE, Xianjin, Hubei 448124 (CN)
(74) Representative: Groth & Co. KB
(86) International application number: PCT/CN2022/113432
(87) International publication number: WO 2023/098147

(56) References cited:
- WO-A1-2020/232556
- CN-A- 106 299 347
- CN-A- 108 172 799
- CN-A- 108 878 818
- CN-A- 110 504 445
- CN-A- 112 164 784
- CN-A- 112 978 809
- CN-A- 112 978 809
- CN-A- 114 314 688
- WU KANG ET AL: "In situ synthesis of a nickel concentration gradient structure of Ni-rich LiNi 0.8 Co 0.15 Al 0.05 O 2 with promising superior electrochemical properties at high cut-off voltage", NANOSCALE, vol. 12, no. 20, 16 April 2020 (2020-04-16), United Kingdom, pages 11182 - 11191, XP093185002, ISSN: 2040-3364, DOI: 10.1039/D0NR01557A
- WU, KANG ET AL.: ""A novel synthesis strategy to improve cycle stability of LiNi0.8Mn0.1Co0.1O2 at high cut-off voltages through core–shell structuring"", NANO RESEARCH, vol. 12, 3 August 2019 (2019-08-03), XP036896439, ISSN: 1998-0124, DOI: 10.1007/s12274-019-2469-6

## Description

### TECHNICAL FIELD

The present disclosure relates to the technical field of lithium battery materials, in particular to a high-nickel ternary core-shell precursor for a lithium battery, a positive electrode material and a preparation method therefor.

### BACKGROUND

In recent years, with the arrival of energy crisis and the need to reduce carbon emissions, new energy vehicles have emerged in people's vision and occupied an increasing share in the market. However, if the new energy vehicles need to further develop and completely replace traditional fuel vehicles, the problem of "mileage anxiety" needs to be solved, which requires core components, namely power lithium batteries, of the new energy vehicles to have higher energy density. In order to meet this requirement, it is needed to select a high-energy-density positive electrode material which can work stably.

Among several current mainstream positive electrode materials, a lithium-rich manganese-based positive electrode has a low cost and high capacity, but its irreversible capacity is relatively large during the first cycle, and the voltage and capacity attenuation during the cycle is large. As the multiplying power increases, its capacity also rapidly decreases, which makes it difficult to realize commercial applications. At present, in the field of power batteries, the positive electrodes which are mainly applied are two commercial materials such as lithium iron phosphate and a ternary layered oxide material. Lithium iron phosphate has the advantages of low cost, good cycle performance and good safety, but its capacity is low. With the improvement of a process, the specific capacity has become closer to its theoretical limit, and there is little space for improvement in the future. Moreover, its poor low-temperature performance also limits its application range. The ternary layered oxide material has good capacity density, good cycle performance and high compaction density, moreover, with the increase of Ni content, its actual specific capacity also increases, and in terms of solving the problem of "mileage anxiety", the ternary layered oxide material has more advantages. Therefore, in future development, the ternary layered oxide material will gradually occupy the mainstream position in the field of power batteries. CN112978809A discloses a preparation method of an aluminum-doped nickel-cobalt-manganese positive electrode material precursor with a core-shell structure, and the finally synthesized precursor is of a core-shell structure with a compact interior and can be calcined with Li at low temperature to form a positive electrode material, so that the cost is reduced. WO2020232556A1 relates to improvements in the field of processes for preparing metal hydroxides and metal oxides that contain at least one metal chosen from nickel, cobalt, manganese, lithium, aluminum, and cobalt. For example, such material can be useful in the manufacture of cathode materials for rechargeable lithium batteries (such as lithium-ion, lithium polymer, solid state lithium batteries). WU KANG et al. discloses in situ synthesis of a nickel concentration gradient structure of Ni-rich LiNi0.8Co0.15Al0.05O2 with promising superior electrochemical properties at high cut-off voltage (NANOSCALE, vol.12, no. 20, 16 April 2020). CN112164784A discloses a quaternary concentration gradient core-shell lithium ion battery negative electrode material prepared by using a first salt solution containing nickel, cobalt, and manganese and a second salt solution containing nickel, cobalt, and manganese.

Although a high-nickel ternary layered oxide material has high specific capacity, the high Ni content also reduces its stability, which leads to poor cycle performance and safety of high-nickel materials, greatly affecting its application in the field of the power batteries. Therefore, how to improve the stability of the high-nickel ternary layered oxide material has become a research hotspot for some scientists, and it is currently believed that a core-shell structure is an effective means to improve the stability. However, the conventional co-precipitation method for preparing core-shell precursors requires changing the proportion of ternary solutions, which is not conducive to operation. However, configuring different proportions of ternary solutions also requires increasing the number of storage tanks, which increases device costs.

### SUMMARY OF THE INVENTION

Aiming at above shortcomings existing in the prior art, the present disclosure provides a high-nickel ternary core-shell precursor for a lithium battery, a positive electrode material and a preparation method therefor.

The invention is defined by the claims. The present disclosure is implemented through the following technical solution.

Disclosed is a A high-nickel ternary core-shell precursor, characterized in that a chemical structural formula of the precursor is zNi(C₄H₇N₂O₂)₂-Ni_{x-z}M1_{y}M2_{1-x-y}(OH)₂, where, 0.6≤x≤0.9, 0.05≤y≤0.2, 0<z≤0.24, and M1 and M2 are two of cobalt, aluminum and manganese.

Claimed is a method for preparing the above precursor, characterized by including:
(1) preparing a metal salt solution of 2-4 mol/L by using soluble nickel salt, soluble metal M1 salt and soluble metal M2 salt with a molar ratio of Ni:M1:M2=x:y:(1-x-y), where 0.6≤x≤0.9, and 0.05≤y≤0.2, and preparing a dimethylglyoxime-ammonia water composite solution, a sodium hydroxide solution and an ammonia-water solution respectively;
(2) adding a base solution and introducing N₂ into a reaction kettle, raising a temperature to a range from 40°C to 60°C, pumping the metal salt solution, the dimethylglyoxime-ammonia water composite solution, and the ammonia-water solution which are prepared in step (1) into the reaction kettle, maintaining pH of a reaction system at a range from 8.0 to 10.0, and reacting for 4h to 20 h to obtain a sphere-like precursor core with a structural formula of Ni(C₄H₇N₂O₂)₂; and
(3) keeping pumping the metal salt solution and the ammonia-water solution, stopping pumping the dimethylglyoxime-ammonia water composite solution, pumping the sodium hydroxide solution prepared in step (1) into the reaction kettle, maintaining pH of the reaction system at a range from 9.0 to 12.0, continuing to react for 30h to 80h to obtain a sphere-like core-shell precursor with a structural formula of zNi(C₄H₇N₂O₂)₂-Ni_{x-z}M1_{y}M2_{1-x-y}(OH)₂, where 0.6≤x≤0.9, 0.05≤y≤0.2, and 0<z≤0.24.

Further, the soluble nickel salt in step (1) is one or more of nickel sulfate, nickel chloride, and nickel nitrate; and the soluble metal M1 salt and the soluble metal M2 salt are two of soluble cobalt salt, soluble aluminum salt, and soluble manganese salt.

Further, the soluble cobalt salt is one of cobalt sulfate, cobalt chloride, and cobalt nitrate; the soluble aluminum salt is one of aluminum sulfate, sodium metaaluminate, and aluminum nitrate; and the soluble manganese salt is one of manganese sulfate, manganese chloride, and manganese nitrate.

Further, the dimethylglyoxime-ammonia water composite solution is prepared by dissolving dimethylglyoxime (C₄H₈N₂O₂) in concentrated ammonia liquor, where a ratio of the dimethylglyoxime to the concentrated ammonia liquor is 1 g:(10-200 ml), and a concentration of the concentrated ammonia liquor is 25% to 28%; and concentrations of the sodium hydroxide solution and the ammonia-water solution are both 2 mol/L.

Further, the base solution in step (2) is prepared by adding water with 2/3 of a volume of the reaction kettle into the reaction kettle, then adding ammonia water with the concentration of 10% to 28% and adjusting pH to a range from 8.0 to 10.0, with a flow rate of N₂ being from 0.5m³/h to 2m³/h.

Further, in a reaction process of step (2), the metal salt solution has a flow rate of ranging from 1L/h to 50L/h, the dimethylglyoxime-ammonia water composite solution has a flow rate of ranging from 3L/h to 10L/h, and the ammonia-water solution has a flow rate of ranging from 0L/h to 3L/h; and a stirring speed is in a range from 200r/min to 400r/min.

Further, in a reaction process of step (3), the sodium hydroxide solution has a flow rate of ranging from 1L/h to 17L/h, and a stirring speed is in a range from 300r/min to 400r/min.

Disclosed is a positive electrode material prepared using the above precursor, characterized in that a structural formula of the positive electrode material is LiNiₓM1_{y}M2_{1-x-y}O₂, where 0.6≤x≤0.9, and 0.05≤y≤0.2.

Claimed is a method for preparing the above positive electrode material, characterized by including: washing, drying, sieving and deioned the high-nickel ternary core-shell precursor prepared by the method above, then mixing with a lithium source, maintaining a temperature at a range from 300°C to 500°C for 3h to 5h, then raising a temperature to a range from 700°C to 900°C and maintaining for 10h to 20h, where the lithium source is lithium hydroxide or lithium carbonate; and a molar ratio of the lithium source to the core-shell precursor is (1-1.2):1.

The beneficial technical effects of the present disclosure are that a ternary precursor of a core-shell structure is prepared by a co-precipitation method, the characteristic reaction of the dimethylglyoxime with Ni ions is utilized to form the precursor of the core-shell structure with a core nickel content of 100% and a low shell nickel content without changing a chemical ratio of a ternary solution. The positive electrode material of the core-shell structure is obtained after mixing with lithium and calcining, compared with ordinary materials with the same chemical ratio, the core-shell material can maintain high capacity, and also has excellent cycle performance. At the same time, the operation process is also simplified, and the number of storage tanks is reduced.

### BRIEF DESCRIPTION OF THE DRAWINGS

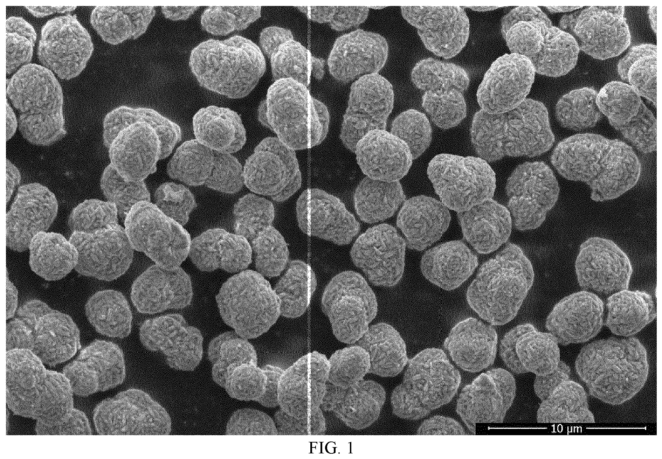

FIG 1 is an SEM image of a ternary precursor in Embodiment 3.

### DETAILED DESCRIPTION

The present disclosure is described in detail below with reference to accompanying drawings and specific implementations.

Dimethylglyoxime of the present disclosure may undergo a characteristic reaction with Ni ions, and a core-shell structure with a core nickel content of 100% and a low shell nickel content may be obtained by utilizing the reaction. Therefore, when the chemical ratio is the same, compared with ordinary materials, the core-shell material can maintain high capacity, and also has excellent cycle performance.

### Embodiment 1:

Step 1. A metal salt solution of 2 mol/L is prepared by using nickel nitrate, cobalt nitrate, and manganese nitrate with a molar ratio of Ni:Co:Mn=0.6:0.2:0.2, dimethylglyoxime (C₄H₈N₂O₂) is dissolved in concentrated ammonia liquor of 25% to 28% to prepare a dimethylglyoxime-ammonia water composite solution of 10 g/L, and sodium hydroxide and ammonia water are prepared into solutions with concentrations being both 2 mol/L respectively;
step 2. water of 130 L (namely 2/3 of a volume of a reaction kettle) is added into the reaction kettle, the ammonia water of 14% to 16% is used to adjust pH to a range from 8.0 to 9.0, N₂ is introduced into the reaction kettle with a flow rate being 0.6m³/h, a temperature is raised to 50°C, the above metal salt solution of 8L/h, the dimethylglyoxime-ammonia water composite solution of 10L/h and the ammonia-water solution of ranging from 0L/h to 3L/h are pumped into the reaction kettle, pH in the reaction kettle is maintained at a range from 8.0 to 9.0, a stirring speed is in a range from 340r/min to 380r/min, and reaction is performed for 10h to obtain a sphere-like precursor core with a structural formula of Ni(C₄H₇N₂O₂)₂;
step 3. pumping of the metal salt solution and the ammonia-water solution is kept, pumping the dimethylglyoxime-ammonia water composite solution is stopped, the 2 mol/L sodium hydroxide solution of ranging from 1.4L/h to 1.6L/h is pumped into the reaction kettle, pH in the reaction is maintained at a range from 9.4 to 10.0, the stirring speed is in a range from 340r/min to 380r/min, and reaction is continued for 60h to obtain a sphere-like core-shell precursor with a structural formula of 0.1Ni(C₄H₇N₂O₂)₂-Ni_{0.5}Co_{0.2}Mn_{0.2}(OH)₂; and
step 4. the above core-shell precursor is washed, dried, sieved and deioned, and then is mixed with lithium carbonate, a temperature is maintained at 400°C for 5h, and then the temperature is raised to 800°C and maintained for 12h to obtain a ternary material of a core-shell structure with a structural formula of LiNi_{0.6}Co_{0.2}Mn_{0.2}O₂, where a molar ratio of the lithium carbonate to the precursor is 1.2:1. The positive electrode material is assembled into a CR2025 button battery and subjected to electrochemical performance testing, and results show that at a multiplying power of 0.1C and within a voltage range of 2.8V to 4.3V, a discharge capacity is 182.1mA/g, and a capacity retention rate for 100 cycles at 0.5C is 92.9%.

### Embodiment 2:

Step 1. A metal salt solution of 2 mol/L is prepared by using nickel chloride, cobalt chloride and manganese chloride with a molar ratio of Ni:Co:Mn=0.8:0.1:0.1, dimethylglyoxime (C₄H₈N₂O₂) is dissolved in concentrated ammonia liquor of 25% to 28% to prepare a dimethylglyoxime-ammonia water composite solution of 10 g/L, and sodium hydroxide and ammonia water are prepared into solutions with concentrations being both 2 mol/L respectively;
step 2. water of 130 L is added into a reaction kettle, the ammonia water of 14% to 16% is used to adjust pH to a range from 8.0 to 9.0, N₂ is introduced into the reaction kettle with a flow rate being 0.6m³/h, a temperature is raised to 50°C, the above metal salt solution of 8L/h, the dimethylglyoxime-ammonia water composite solution of 10L/h and the ammonia-water solution of ranging from 0L/h to 3L/h are pumped into the reaction kettle, pH in the reaction is maintained at a range from 8.0 to 9.0, a stirring speed is in a range from 340r/min to 380r/min, and reaction is performed for 10h to obtain a sphere-like precursor core with a structural formula of Ni(C₄H₇N₂O₂)₂;
step 3. pumping of the metal salt solution and the ammonia-water solution is kept, pumping the dimethylglyoxime-ammonia water composite solution is stopped, the 2 mol/L sodium hydroxide solution of ranging from 1.4L/h to 1.6L/h is pumped into the reaction kettle, pH in the reaction is maintained at a range from 9.6 to 11.0, the stirring speed is in a range from 340r/min to 380r/min, and reaction is continued for 55h to obtain a sphere-like core-shell precursor with a structural formula of 0.1Ni(C₄H₇N₂O₂)₂-Ni_{0.7}Co_{0.1}Mn_{0.1}(OH)₂; and
step 4. the above core-shell precursor is washed, dried, sieved and deioned, and then is mixed with lithium hydroxide, a temperature is maintained at 400°C for 5h, then the temperature is raised to 800°C and maintained for 12h to obtain a ternary material of a core-shell structure with a structural formula of LiNi_{0.8}Co_{0.1}Mn_{0.1}O₂, a molar ratio of the lithium hydroxide to the precursor is 1.2:1. The positive electrode material is assembled into a CR2025 button battery and subjected to electrochemical performance testing, and results show that at a multiplying power of 0.1C and within a voltage range of 2.8V to 4.3V, a discharge capacity is 191.4mA/g, and a capacity retention rate for 100 cycles at 0.5C is 92.3%.

### Embodiment 3:

Step 1. A metal salt solution of 2 mol/L is prepared by using nickel sulfate, cobalt sulfate, and manganese sulfate with a molar ratio of Ni:Co:Mn=0.9:0.05:0.05, dimethylglyoxime (C₄H₈N₂O₂) is dissolved in concentrated ammonia liquor of 25% to 28% to prepare a dimethylglyoxime-ammonia water composite solution of 10 g/L, and sodium hydroxide and ammonia water are prepared into solutions with concentrations being both 2 mol/L respectively;
step 2. water of 130 L is added into a reaction kettle, the ammonia water of 14% to 16% is used to adjust pH to a range from 8.0 to 9.0, N₂ is introduced into the reaction kettle with a flow rate being 0.6m³/h, a temperature is raised to 50°C, the above metal salt solution of 8L/h, the dimethylglyoxime-ammonia water composite solution of 10L/h and the ammonia water solution of ranging from 0L/h to 3L/h are pumped into the reaction kettle, pH in the reaction is maintained at a range from 8.0 to 9.0, a stirring speed is 340r/min to 380r/min, and reaction is performed for 10h to obtain a sphere-like precursor core with a structural formula of Ni(C₄H₇N₂O₂)₂;
step 3. pumping of the metal salt solution and the ammonia-water solution is kept, pumping the dimethylglyoxime-ammonia water composite solution is stopped, the 2 mol/L sodium hydroxide solution of ranging from 1.4L/h to 1.6L/h is pumped into the reaction kettle, pH in the reaction is maintained at a range from 11.0 to 12.0, the stirring speed is in a range from 340r/min to 380r/min, and reaction is continued for 50h to obtain a sphere-like core-shell precursor with a structural formula of 0.1Ni(C₄H₇N₂O₂)₂-Ni_{0.8}Co_{0.05}Mn_{0.05}(OH)₂; and
step 4. the above core-shell precursor is washed, dried, sieved and deioned, and then is mixed with lithium hydroxide, a temperature is maintained at 400°C for 5h, then the temperature is raised to 800°C and maintained for 12h to obtain a ternary material of a core-shell structure with a structural formula of LiNi_{0.9}Co_{0.05}Mn_{0.05}O₂, where a molar ratio of the lithium hydroxide to the precursor is 1.2:1. The positive electrode material is assembled into a CR2025 button battery and subjected to electrochemical performance testing, and results show that at a multiplying power of 0.1C and within a voltage range of 2.8V to 4.3V, a discharge capacity is 217.1mA/g, and a capacity retention rate for 100 cycles at 0.5C is 90.3%.

### Embodiment 4:

Step 1. A metal salt solution of 3 mol/L is prepared by using nickel sulfate, cobalt sulfate, and sodium metaaluminate with a molar ratio of Ni:Co:Al=0.8:0.15:0.05, dimethylglyoxime (C₄H₈N₂O₂) is dissolved in concentrated ammonia liquor of 25% to 28% to prepare a dimethylglyoxime-ammonia water composite solution of 10 g/L, and sodium hydroxide and ammonia water are prepared into solutions with concentrations being both 2 mol/L respectively;
step 2. water of 130 L is added into a reaction kettle, the ammonia water of 14% to 16% is used to adjust pH to a range from 8.0 to 9.0, N₂ is introduced into the reaction kettle with a flow rate being 0.6m³/h, a temperature is raised to 58°C, the above metal salt solution of 30L/h, the dimethylglyoxime-ammonia water composite solution of 5L/h and the ammonia water solution of ranging from 0L/h to 3L/h are pumped into the reaction kettle, pH in the reaction is maintained at a range from 9.0 to 10.0, a stirring speed is in a range from 340r/min to 360r/min, and reaction is performed for 20h to obtain a sphere-like precursor core with a structural formula of Ni(C₄H₇N₂O₂)₂;
step 3. pumping of the metal salt solution and the ammonia-water solution is kept, pumping the dimethylglyoxime-ammonia water composite solution is stopped, the 2 mol/L sodium hydroxide solution of ranging from 8L/h to 10L/h is pumped into the reaction kettle, pH in the reaction is maintained at a range from 9.2 to 9.8, the stirring speed is in a range from 380r/min to 400r/min, and reaction is continued for 70h to obtain a sphere-like core-shell precursor with a structural formula of 0.2Ni(C₄H₇N₂O₂)₂-Ni_{0.6}Co_{0.15}Al_{0.05}(OH)₂; and
step 4. the above core-shell precursor is washed, dried, sieved and deioned, and then is mixed with lithium carbonate, a temperature is maintained at 500°C for 3h, and then the temperature is raised to 900°C and maintained for 11h to obtain a ternary material of a core-shell structure with a structural formula of LiNi_{0.8}Co_{0.15}Al_{0.05}O₂, where a molar ratio of the lithium carbonate to the precursor is 1.1:1. The positive electrode material is assembled into a CR2025 button battery and subjected to electrochemical performance testing, and results show that at a multiplying power of 0.1C and within a voltage range of 2.8V to 4.3V, a discharge capacity is 190.3mA/g, and a capacity retention rate for 100 cycles at 0.5C is 90.2%.

### Embodiment 5:

Step 1. A metal salt solution of 4 mol/L is prepared by using nickel sulfate, cobalt sulfate, and aluminum nitrate with a molar ratio of Ni:Co:Al=0.89:0.1:0.01, dimethylglyoxime (C₄H₈N₂O₂) is dissolved in concentrated ammonia liquor of 25% to 28% to prepare a dimethylglyoxime-ammonia water composite solution of 10 g/L, and sodium hydroxide and ammonia water are prepared into solutions with concentrations being both 2 mol/L respectively;
step 2. water of 130 L is added into a reaction kettle, the ammonia water of 14% to 16% is used to adjust pH to a range from 8.0 to 9.0, N₂ is introduced into the reaction kettle with a flow rate being 1.5m³/h, a temperature is raised to 58°C, the above metal salt solution of 45L/h, the dimethylglyoxime-ammonia water composite solution of 5L/h and the ammonia-water solution of 0L/h to 2L/h are pumped into the reaction kettle, pH in the reaction is maintained at a range from 8.0 to 9.0, a stirring speed is in a range from 340r/min to 360r/min, and reaction is performed for 20h to obtain a sphere-like precursor core with a structural formula of Ni(C₄H₇N₂O₂)₂;
step 3. pumping of the metal salt solution and the ammonia-water solution is kept, pumping the dimethylglyoxime-ammonia water composite solution is stopped, the 2 mol/L sodium hydroxide solution of ranging from 15L/h to 17L/h is pumped into the reaction kettle, pH in the reaction is maintained at a range from 10.0 to 11.4, the stirring speed is in a range from 300r/min to 320r/min, and reaction is continued for 65h to obtain a sphere-like core-shell precursor with a structural formula of 0.24Ni(C₄H₇N₂O₂)₂-Ni_{0.65}Co_{0.1}Al_{0.01}(OH)₂; and
step 4. the above core-shell precursor is washed, dried, sieved and deioned, and then is mixed with lithium hydroxide, a temperature is maintained at 300°C for 4h, and then the temperature is raised to 850°C and maintained for 10h to obtain a ternary material of a core-shell structure with a structural formula of LiNi_{0.89}Co_{0.1}Al_{0.01}O₂, where a molar ratio of the lithium hydroxide to the precursor is 1.2:1. The positive electrode material is assembled into a CR2025 button battery and subjected to electrochemical performance testing, and results show that at a multiplying power of 0.1C and within a voltage range of 2.8V to 4.3V, a discharge capacity is 210.4mA/g, and a capacity retention rate for 100 cycles at 0.5C is 91.4%.

### Embodiment 6:

Step 1. A metal salt solution of 2 mol/L is prepared by using nickel sulfate, manganese sulfate and aluminum sulfate with a molar ratio of Ni:Mn:Al=0.9:0.05:0.05, dimethylglyoxime (C₄H₈N₂O₂) is dissolved in concentrated ammonia liquor of 25% to 28% to prepare a dimethylglyoxime-ammonia water composite solution of 10 g/L, and sodium hydroxide and ammonia water are prepared into solutions with concentrations being both 2 mol/L respectively;
step 2. water of 130 L is added into a reaction kettle, the ammonia water of 14% to 16% is used to adjust pH to a range from 8.0 to 9.0, N₂ is introduced into the reaction kettle with a flow rate being 0.6m³/h, a temperature is raised to 58°C, the above metal salt solution of 40L/h, the dimethylglyoxime-ammonia water composite solution of 8L/h and the ammonia-water solution of ranging from 2L/h to 3L/h are pumped into the reaction kettle, pH in the reaction is maintained at a range from 8.0 to 9.0, a stirring speed is in a range from 340r/min to 360r/min, and reaction is performed for 10h to obtain a sphere-like precursor core with a structural formula of Ni(C₄H₇N₂O₂)₂;
step 3. pumping of the metal salt solution and the ammonia-water solution is kept, pumping the dimethylglyoxime-ammonia water composite solution is stopped, the 2 mol/L sodium hydroxide solution of ranging from 13L/h to 15L/h is pumped into the reaction kettle, pH in the reaction is maintained at a range from 11.0 to 12.0, the stirring speed is in a range from 360r/min to 380r/min, and reaction is continued for 50h to obtain a sphere-like core-shell precursor with a structural formula of 0.1Ni(C₄H₇N₂O₂)₂-Ni_{0.8}Mn_{0.05}Al_{0.05}(OH)₂; and
step 4. the above core-shell precursor is washed, dried, sieved and deioned, and then is mixed with lithium hydroxide, a temperature is maintained at 400°C for 5h, and then the temperature is raised to 800°C and maintained for 12h to obtain a ternary material of a core-shell structure with a structural formula of LiNi_{0.9}Mn_{0.05}Al_{0.05}O₂, where a molar ratio of the lithium hydroxide to the precursor is 1.2:1. The positive electrode material is assembled into a CR2025 button battery and subjected to electrochemical performance testing, and results show that at a multiplying power of 0.1C and within a voltage range of 2.8V to 4.3V, a discharge capacity is 209.7mA/g, and a capacity retention rate for 100 cycles at 0.5C is 90.1%.

The above are only preferred embodiments of the present disclosure without limiting the present disclosure which is further defined by the claims.

## Claims

1. A method for preparing a high-nickel ternary core-shell precursor, wherein a chemical structural formula of the precursor is zNi(C₄H₇N₂O₂)₂-Ni_{x-z}M1_{y}M2_{1-x-y}(OH)₂, wherein, 0.6≤x≤0.9, 0.05≤y≤0.2, 0<z≤0.24, and M1 and M2 are two of cobalt, aluminum and manganese, and wherein the method comprises:
(1) preparing a metal salt solution of 2-4 mol/L by using soluble nickel salt, soluble metal M1 salt and soluble metal M2 salt with a molar ratio of Ni:M1:M2=x:y:(1-x-y), wherein 0.6≤x≤0.9 and 0.05≤y≤0.2, and preparing a dimethylglyoxime-ammonia water composite solution, a sodium hydroxide solution and an ammonia-water solution respectively;
(2) adding a base solution and introducing N₂ into a reaction kettle, raising a temperature to a range from 40°C to 60°C, pumping the metal salt solution, the dimethylglyoxime-ammonia water composite solution, and the ammonia-water solution which are prepared in step (1) into the reaction kettle, maintaining pH of a reaction system at a range from 8.0 to 10.0, and reacting for 4h to 20h to obtain a sphere-like precursor core with a structural formula of Ni(C₄H₇N₂O₂)₂; and
(3) keeping pumping the metal salt solution and the ammonia-water solution, stopping pumping the dimethylglyoxime-ammonia water composite solution, pumping the sodium hydroxide solution prepared in step (1) into the reaction kettle, maintaining pH of the reaction system at a range from 9.0 to 12.0, continuing to react for 30h to 80h to obtain a sphere-like core-shell precursor with the structural formula of zNi(C₄H₇N₂O₂)₂-Ni_{x-z}M1_{y}M2_{1-x-y}(OH)₂, wherein 0.6≤x≤0.9, 0.05≤y≤0.2, and 0<z≤0.24.

2. The method of claim 1, wherein the soluble nickel salt in step (1) is one or more of nickel sulfate, nickel chloride, and nickel nitrate; and the soluble metal M1 salt and the soluble metal M2 salt are two of soluble cobalt salt, soluble aluminum salt, and soluble manganese salt.

3. The method of claim 2, wherein the soluble cobalt salt is one of cobalt sulfate, cobalt chloride, and cobalt nitrate; the soluble aluminum salt is one of aluminum sulfate, sodium metaaluminate, and aluminum nitrate; and the soluble manganese salt is one of manganese sulfate, manganese chloride, and manganese nitrate.

4. The method of claim 1, wherein the dimethylglyoxime-ammonia water composite solution is prepared by dissolving dimethylglyoxime (C₄H₈N₂O₂) in concentrated ammonia liquor, wherein a ratio of the dimethylglyoxime to the concentrated ammonia liquor is 1 g:(10-200 ml), and a concentration of the concentrated ammonia liquor is 25% to 28%; and concentrations of the sodium hydroxide solution and the ammonia-water solution are both 2 mol/L.

5. The method of claim 1, wherein the base solution in step (2) is prepared by adding water with 2/3 of a volume of the reaction kettle into the reaction kettle, then adding ammonia water with the concentration of 10% to 28% and adjusting pH to a range from 8.0 to 10.0, with a flow rate of N₂ being from 0.5m³/h to 2m³/h.

6. The method of claim 1, wherein in a reaction process of step (2), the metal salt solution has a flow rate of ranging from 1L/h to 50L/h, the dimethylglyoxime-ammonia water composite solution has a flow rate of ranging from 3L/h to 10L/h, and the ammonia-water solution has a flow rate of ranging from 0L/h to 3L/h; and a stirring speed is in a range from 200r/min to 400r/min.

7. The method of claim 1, wherein in a reaction process of step (3), the sodium hydroxide solution has a flow rate of ranging from 1L/h to 17L/h, and a stirring speed is in a range from 300r/min to 400r/min.

8. A method for preparing a positive electrode material, wherein a structural formula of the positive electrode material is LiNiₓM1_{y}M2_{1-x-y}O₂, wherein 0.6≤x≤0.9 and 0.05≤y≤0.2, and wherein the method comprises: washing, drying, sieving and deioned the high-nickel ternary core-shell precursor prepared by the method of claim 1, then mixing with a lithium source, maintaining a temperature at a range from 300°C to 500°C for 3h to 5h, then raising a temperature to a range from 700°C to 900°C and maintaining for 10h to 20h, wherein the lithium source is lithium hydroxide or lithium carbonate; and a molar ratio of the lithium source to the core-shell precursor is (1-1.2):1.

## Patentansprüche

1. Verfahren zur Herstellung eines ternären Kern-Schale-Vorläufers mit hohem Nickelgehalt, wobei die chemische Strukturformel des Vorläufers zNi(C₄H₇N₂O₂)₂-Ni_{x-z}M1_{y}M2_{1-x-y}(OH)₂ ist, wobei 0,6≤x≤0,9, 0,05≤y≤0,2, 0<z≤0,24 gilt und M1 und M2 zwei aus Kobalt, Aluminium und Mangan sind, wobei das Verfahren umfasst:
(1) Herstellen einer Metallsalzlösung mit 2 bis 4 mol/L unter Verwendung eines löslichen Nickelsalzes, eines löslichen Metall-M1-Salzes und eines löslichen Metall-M2-Salzes in einem Molverhältnis von Ni: M1: M2 = x: y: (1-x-y), wobei 0,6≤x≤0,9 und 0,05≤y≤0,2 gilt, sowie jeweiliges Herstellen einer Dimethylglyoxim-Ammoniakwasser-Verbundlösung, einer Natriumhydroxidlösung und einer Ammoniakwasserlösung;
(2) Zugeben einer Basenlösung und Einleiten von N₂ in einen Reaktionskessel, Erhöhen der Temperatur auf einen Bereich von 40°C bis 60°C, Einpumpen der in Schritt (1) hergestellten Metallsalzlösung, der in Schritt (1) hergestellten Dimethylglyoxim-Ammoniakwasser-Verbundlösung und der in Schritt (1) hergestellten Ammoniakwasserlösung in den Reaktionskessel, Halten des pH-Werts eines Reaktionssystems in einem Bereich von 8,0 bis 10,0 und Reagieren für 4 h bis 20 h, um einen kugelförmigen Vorläuferkern mit der Strukturformel Ni(C₄H₇N₂O₂)₂ zu erhalten; und
(3) fortgesetztes Einpumpen der Metallsalzlösung und der Ammoniakwasserlösung, Beenden des Einpumpens der Dimethylglyoxim-Ammoniakwasser-Verbundlösung, Einpumpen der in Schritt (1) hergestellten Natriumhydroxidlösung in den Reaktionskessel, Halten des pH-Werts des Reaktionssystems in einem Bereich von 9,0 bis 12,0 und Fortsetzen der Reaktion für 30 h bis 80 h, um einen kugelförmigen Kern-Schale-Vorläufer mit der Strukturformel zNi(C₄H₇N₂O₂)₂-Ni_{x-z}M1_{y}M2_{1-x-y}(OH)₂ zu erhalten, wobei 0,6≤x≤0,9, 0,05≤y≤0,2 und 0<z≤0,24 gilt.

2. Verfahren nach Anspruch 1, wobei das lösliche Nickelsalz in Schritt (1) eines oder mehrere aus Nickelsulfat, Nickelchlorid und Nickelnitrat ist, und wobei das lösliche Metall-M1-Salz und das lösliche Metall-M2-Salz zwei aus löslichem Kobaltsalz, löslichem Aluminiumsalz und löslichem Mangansalz sind.

3. Verfahren nach Anspruch 2, wobei das lösliche Kobaltsalz eines aus Kobaltsulfat, Kobaltchlorid und Kobaltnitrat ist, das lösliche Aluminiumsalz eines aus Aluminiumsulfat, Natriummetaaluminat und Aluminiumnitrat ist und das lösliche Mangansalz eines aus Mangansulfat, Manganchlorid und Mangannitrat ist.

4. Verfahren nach Anspruch 1, wobei die Dimethylglyoxim-Ammoniakwasser-Verbundlösung dadurch hergestellt wird, dass Dimethylglyoxim (C₄H₈N₂O₂) in konzentriertem Ammoniakwasser gelöst wird, und wobei das Verhältnis von Dimethylglyoxim zu konzentriertem Ammoniakwasser 1 g:(10-200 ml) beträgt und die Konzentration des konzentrierten Ammoniakwassers 25 % bis 28 % beträgt, und wobei die Konzentrationen der Natriumhydroxidlösung und der Ammoniakwasserlösung beide 2 mol/L betragen.

5. Verfahren nach Anspruch 1, wobei die Basenlösung in Schritt (2) dadurch hergestellt wird, dass Wasser in einer Menge von 2/3 des Volumens des Reaktionskessels in den Reaktionskessel gegeben wird, anschließend Ammoniakwasser mit einer Konzentration von 10 % bis 28 % zugegeben wird und der pH-Wert auf einen Bereich von 8,0 bis 10,0 eingestellt wird, wobei die Durchflussrate von N₂ 0,5 m³/h bis 2 m³/h beträgt.

6. Verfahren nach Anspruch 1, wobei im Reaktionsprozess von Schritt (2) die Metallsalzlösung eine Durchflussrate im Bereich von 1 L/h bis 50 L/h aufweist, die Dimethylglyoxim-Ammoniakwasser-Verbundlösung eine Durchflussrate im Bereich von 3 L/h bis 10 L/h aufweist und die Ammoniakwasserlösung eine Durchflussrate im Bereich von 0 L/h bis 3 L/h aufweist, und wobei die Rührgeschwindigkeit in einem Bereich von 200 r/min bis 400 r/min liegt.

7. Verfahren nach Anspruch 1, wobei im Reaktionsprozess von Schritt (3) die Natriumhydroxidlösung eine Durchflussrate im Bereich von 1 L/h bis 17 L/h aufweist und die Rührgeschwindigkeit in einem Bereich von 300 r/min bis 400 r/min liegt.

8. Verfahren zur Herstellung eines Positivelektrodenmaterials, wobei die Strukturformel des Positivelektrodenmaterials LiNiₓM1_{y}M2_{1-x-y}O₂ aufweist, wobei 0,6≤x≤0,9 und 0,05≤y≤ 0,2 gilt, wobei das Verfahren umfasst: Waschen, Trocknen, Sieben und Deionisieren des durch das Verfahren nach Anspruch 1 hergestellten ternären Kern-Schale-Vorläufers mit hohem Nickelgehalt, anschließendes Mischen mit einer Lithiumquelle, Halten einer Temperatur in einem Bereich von 300°C bis 500°C für 3 h bis 5 h und anschließendes Erhöhen der Temperatur auf einen Bereich von 700°C bis 900°C und Halten für 10 h bis 20 h, wobei die Lithiumquelle Lithiumhydroxid oder Lithiumcarbonat ist und das Molverhältnis der Lithiumquelle zu dem Kern-Schale-Vorläufer (1-1,2):1 beträgt.

## Revendications

1. Procédé de préparation d'un précurseur d'enveloppe de noyau ternaire à haute teneur en nickel, dans lequel une formule structurale chimique du précurseur est zNi(C₄H₇N₂O₂)₂-Ni_{x-z}M1yM2_{1-x-y}(OH)₂, dans lequel 0,6≤x≤0,9, 0,05≤y≤0,2, 0<z≤0,24, et M1 et M2 sont deux composés de cobalt, d'aluminium et de manganèse, et dans lequel le procédé comprend :
(1) préparer une solution de sel de métal de 2 à 4 mol/L en utilisant du sel de nickel soluble, du sel de métal soluble M1 et du sel de métal soluble M2 avec un rapport molaire de Ni:M1:M2=x:y:(1-x-y), dans lequel 0,6≤x≤0,9 et 0,05≤y≤0,2, et préparer une solution composite diméthylglyoxime-ammoniac d'eau, une solution d'hydroxyde de sodium et une solution d'ammoniac-eau respectivement ;
(2) ajouter une solution de base et introduire du N2 dans une bouilloire de réaction, élever la température à une plage de 40° C à 60° C, pomper la solution de sel de métal, la solution composite de diméthylglyoxime-ammoniac et la solution d'ammoniac-eau préparée à l'étape (1) dans la bouilloire de réaction, en maintenir le pH d'un système de réaction entre 8,0 et 10,0, et laisser réagir de 4h à 20h pour obtenir un noyau précurseur en forme de sphère avec une formule structurelle de Ni(C₄H₇N₂O₂)₂; et
(3) continuer de pomper la solution de sel de métal et la solution ammoniac-eau, arrêter le pompage de la solution composite de diméthylglyoxime-ammoniac d'eau, pomper la solution d'hydroxyde de sodium préparée à l'étape (1) dans la bouilloire de réaction, maintenir le pH du système de réaction entre 9,0 et 12,0, continuer à laisser réagir de 30h à 80h pour obtenir un précurseur en enveloppe de noyau en forme de sphère avec une formule structurelle de zNi(C₄H₇N₂O₂)₂-Ni_{x-z}M1_{y}M2_{1-x-y}(OH)₂, dans lequel 0,6≤x≤0,9, 0,05≤y≤0,2, et 0<z≤0,24.

2. Procédé selon la revendication 1, dans lequel le sel de nickel soluble à l'étape (1) est un ou plusieurs de sulfate de nickel, chlorure de nickel et nitrate de nickel ; et le sel de métal soluble M1 et le sel de métal soluble M2 sont deux d'un sel de cobalt soluble, d'un sel d'aluminium soluble et d'un sel de manganèse soluble.

3. Procédé selon la revendication 2, dans lequel le sel de cobalt soluble est composé de sulfate de cobalt, chlorure de cobalt et nitrate de cobalt ; le sel d'aluminium soluble est composé du sulfate d'aluminium, du métaaluminate de sodium et du nitrate d'aluminium ; et le sel soluble de manganèse est composé de sulfate de manganèse, de chlorure de manganèse et de nitrate de manganèse.

4. Procédé selon la revendication 1, dans lequel la solution composite diméthylglyoxime-eau ammoniac est préparée en dissolvant le diméthylglyoxime (C₄H₈N₂O₂) dans une liqueur d'ammoniac concentrée, dans lequel un rapport entre le diméthylglyoxime et la liqueur d'ammoniac concentrée est de 1 g (10-200 ml), et une concentration de liqueur d'ammoniac concentrée est de 25 % à 28 % ; et les concentrations de la solution d'hydroxyde de sodium et de la solution d'ammoniac-eau sont toutes deux de 2 mol/L.

5. Procédé selon la revendication 1, dans lequel la solution de base à l'étape (2) est préparée en ajoutant de l'eau contenant 2/3 du volume de la bouilloire de réaction dans la bouilloire de réaction, puis en ajoutant de l'eau d'ammoniac avec une concentration de 10 % à 28 % et en ajustant le pH à une plage de 8,0 à 10,0, avec un débit de N₂ allant de 0,5 m³/h à 2 m³/h.

6. Procédé selon la revendication 1, dans lequel, lors d'un processus de réaction de l'étape (2), la solution de sel de métal a un débit allant de 1 L/h à 50 L/h, la solution composite de diméthylglyoxime-ammoniac a un débit allant de 3 L/h à 10 L/h, et la solution ammoniac-eau a un débit allant de 0 L/h à 3 L/h ; et une vitesse de brassage varie de 200 tours/min à 400 tours/min.

7. Procédé selon la revendication 1, dans lequel dans un processus de réaction de l'étape (3), la solution d'hydroxyde de sodium a un débit allant de 1 L/h à 17 L/h, et une vitesse de brassage est comprise entre 300 tours/min et 400 tours/min.

8. Procédé de préparation d'un matériau d'électrode positive, dans lequel une formule structurelle du matériau de l'électrode positive est LiNiₓM1_{y}M2_{1-x-y}O₂, dans lequel 0,6≤x≤0,9 et 0,05≤y≤0,2, et dans lequel le procédé comprend : laver, sécher, tamiser et déioniser le précurseur d'enveloppe de noyau ternaire à haute teneur en nickel préparé par le procédé selon la revendication 1, puis le mélanger avec une source de lithium, en maintenant une température allant de 300° C à 500° C pendant 3h à 5h, puis augmenter la température à une plage de 700° C à 900° C et la maintenir pendant 10 h à 20h, dans lequel la source de lithium est l'hydroxyde de lithium ou le carbonate de lithium ; et un rapport molaire de la source de lithium par rapport au précurseur de l'enveloppe de noyau est (1-1,2):1.
